# EUROPÄISCHE PATENTANMELDUNG

(11) **EP 2 420 118 A1**
(43) Veröffentlichungstag der Anmeldung: **22.02.2012**
(21) Anmeldenummer: 11003105.1
(22) Anmeldetag: 13.04.2011
(51) Int. Cl.: A01B 1/02

(54) **Schaufel**

(30) Priorität: 20.08.2010 DE 202010011607 U
(71) Anmelder: Hingelbaum, Ulrich, 34582 Borken (DE)
(72) Erfinder: Hingelbaum, Ulrich, 34582 Borken (DE)
(74) Vertreter: Walther, Walther & Hinz GbR

(57) **Zusammenfassung**

Schaufel (1), umfassend ein Schaufelblatt (10) und eine Aufnahmehülse (4) für den Schaufelstiel (2), wobei das Schaufelblatt (10) eine gerade Schaufelblattkante (12) aufweist und wobei an dem Schaufelblatt (10) zu beiden Seiten der Aufnahmehülse (4) für den Schaufelstiel (2) eine Trittkante (22a) verläuft, wobei das Schaufelblatt (10) im Randbereich mit einer in der Draufsicht auf das Schaufelblatt (10) U-förmig verlaufenden Aufkantung (20) versehen ist, wobei das Schaufelblatt (10) an die Schaufelblattkante (12) anschließend in Richtung der Aufnahmehülse (4) einen ebenen Bereich A mit einer Länge x aufweist, an den sich über einen Bereich B mit der Länge y eine Wölbung anschließt, wobei die Länge des Bereichs B in etwa 3 - 4,5 mal so lang ist wie die Längserstreckung des Bereichs A, wobei die Schenkel (21) der seitlichen Aufkantung (20) des Schaufelblattes (10) im Übergang von dem Bereich B zu dem Bereich A auf dem Schaufelblatt (10) auslaufen.

## Beschreibung

Die Erfindung betrifft eine Schaufel umfassend ein Schaufelblatt mit einer Aufnahmehülse für den Schaufelstiel, wobei das Schaufelblatt eine gerade Schaufelblattkante aufweist und wobei an dem Schaufelblatt zu beiden Seiten der Aufnahmehülse für den Schaufelstiel eine Trittkante verläuft, wobei das Schaufelblatt im Randbereich mit einer in der Draufsicht auf das Schaufelblatt U-förmig verlaufenden Aufkantung versehen ist.

Schaufeln sind in den unterschiedlichsten Ausführungen bekannt. Es ist beispielsweise eine Holländer Sandschaufel bekannt, bei der das Schaufelblatt in Schubrichtung gewölbt ausgebildet ist. Die Trittkante ist hierbei ebenfalls gewölbt ausgebildet. Weiterhin ist bekannt, eine Holsteiner Sandschaufel, bei der eine im Wesentlichen ebene Schaufelkante vorgesehen ist, und wobei die Schaufel im seitlichen Randbereich eine Aufkantung aufweist, wobei jedoch die Trittkante ebenfalls gewölbt ausgebildet ist. Die Emsländer Sandschaufel ist ähnlich ausgebildet wie die Holsteiner Sandschaufel, mit dem einzigen Unterschied, dass die Schaufelblattkante in Schubrichtung gewölbt ausgebildet ist, ganz ähnlich wie bei der Holländer Sandschaufel. Des Weiteren ist bekannt, die sogenannte Bayrische Sandschaufel, die ein etwa dreieckförmiges Schaufelblatt aufweist, mit einer sich zu beiden Seiten der Aufnahmehülse für den Schaufelstiel erstreckenden, als Aufkantung ausgebildeten geraden Trittkante. Das Schaufelblatt der Bayrischen Sandschaufel ist ausgehend von der Mittellängsachse zu beiden Seiten hoch gekantet. Die Hallenser Sandschaufel zeichnet sich dadurch aus, dass das Schaufelblatt auf der Unterseite im Wesentlichen eben ausgebildet ist, zu beiden Seiten jedoch eine relativ hohe Aufkantung aufweist, wobei die Aufkantung zu beiden Seiten der Aufnahmehülse für den Schaufelstiel schräg abfallend ausgebildet ist. Die Hallenser Sandschaufel stellt ein hohes Schaufelvolumen zur Verfügung, jedoch hat diese Schaufel den Nachteil, dass aufgrund der schräg verlaufenden Trittkante der Eintrieb der Schaufel in das zu schaufelnde Gut nur mithilfe der Armkraft und unter Einsatz des Oberkörpers möglich ist, nicht jedoch unter Einsatz der Beinkraft, wie dies beispielsweise der Fall ist bei einer Kabelgrabenschaufel, deren Schaufelblatt gewölbt ausgebildet ist, die allerdings zu beiden Seiten der Aufnahmehülse für den Schaufelstiel eine gerade Trittkante aufweist. Eine solche gerade Trittkante zeigt auch die Frankfurter Schaufel, die allerdings im Bereich der Schaufelblattkante in Schubrichtung eine spitz zulaufende Wölbung aufweist. Im Bereich der im Wesentlichen geraden Trittkante der Frankfurter Schaufel ist eine Aufkantung vorgesehen, um das Schaufelvolumen zu erhöhen. Das Schaufelblatt ist auch hier um die Mittellängsachse des Schaufelblattes gewölbt ausgebildet.

Die einzelnen Ausführungsformen der Schaufelblätter weisen die unterschiedlichsten Nachteile, allerdings auch teilweise Vorteile auf, je nachdem für welchen Anwendungsfall die Schaufel Verwendung finden soll. So zeigt die Frankfurter Schaufel zwar eine sich zu beiden Seiten der Aufnahmehülse erstreckende gerade Trittkante, jedoch weist die Schaufelblattkante eine in Schubrichtung ausgebildete Wölbung auf, wobei darüber hinaus das Schaufelblatt um die Mittellängsachse nach außen gewölbt hochgezogen ist. Die Folge hiervon ist, dass, wenn mit dem Fuß Unterstützung beim Eintrieb der Schaufel in das zu schaufelnde Gut erzeugt werden soll, insbesondere bei einem festen Untergrund, dass dann die Schaufel dennoch zur Seite hin ausweicht. Die Holsteiner Sandschaufel besitzt in diesem Zusammenhang eine gerade verlaufende Schaufelblattkante, sodass selbst bei gewölbter Schaufel das Schaufelblatt seitlich nicht auszubrechen vermag, jedoch ist die Trittkante gewölbt ausgebildet, sodass die Gefahr besteht, dass man mit dem Fuß von der Trittkante seitlich abrutscht.

Die Hallenser Randschaufel wiederum zeigt, wie dies bereits zuvor erwähnt worden ist, zwar eine gerade verlaufende Schaufelblattkante, und besitzt darüber hinaus eine in der Draufsicht auf die Schaufel U-förmig umlaufende Aufbörtelung, sodass mit dieser Schaufel zwar theoretisch ein erhebliches Volumen aufgenommen werden kann, jedoch lässt sich die Schaufel mit dem Fuß nicht oder nur schlecht in das zu schaufelnde Gut eintreiben, da die Trittkante schräg verläuft. Es gibt allerdings auch eine Ausführungsform der Hallenser Randschaufel bei der die Trittkante über einen kleinen Abschnitt nahezu eben verläuft. Im Bereich der Schaufelblattkante ist seitlich eine Schräge vorgesehen, wobei am Ende der Schräge die seitliche Aufkantung beginnt. Die Aufkantung im Seitenbereich verläuft im Querschnitt V-förmig schräg nach außen. Darüber hinaus ist nachteilig, dass das Schaufelblatt auf seiner Unterseite vollständig eben ist, was bedingt, dass der Kraftaufwand zum Eintrieb der Schaufel in das zu schaufelnde Gut noch zusätzlich erhöht wird. Dies deshalb, weil beispielsweise dann, wenn mit der Schaufel das zu schaufelnde Gut von einem festen Untergrund aufgenommen werden muss, mit Reibungsverlusten auf der gesamten Schaufelblattunterseite zu rechnen ist.

Des Weiteren ist bekannt, die Hamburger-Kohlenschaufel.
Die Hamburger-Kohlenschaufel besitzt eine gerade verlaufende Schaufelblattkante sowie eine parallel dazu verlaufende Trittkante. Diese Schaufel besitzt ein gewölbtes Schaufelblatt. Im vorderen Bereich ist das Schaufelblatt nahezu eben ausgebildet. Die seitliche Aufkantung verläuft schräg nach außen und läuft unter Ausbildung einer Schräge zur Schaufelblattkante hin aus. Das heißt, die seitliche Aufkantung erstreckt sich bis an die Schaufelblattkante.

Jede der zuvor beschriebenen Schaufeln eignet sich für mehr oder weniger spezielle Einsatzzwecke. Im Bau jedoch gibt es durchaus übergreifende Einsatzzwecke. Ein besonderer Einsatzzweck für solche Schaufeln besteht im Pflasterbetrieb. Beim Pflastern werden Pflastersteine oder auch Verbundpflaster häufig auf einer Schicht Grus oder Sand verlegt, wobei die Grus- oder Sandschicht eben abgezogen ist. Im Randbereich allerdings wird das Planum von Hand nachgearbeitet, indem beispielsweise mit einer Schaufel der Randbereich nachgezogen wird. Dieses Planum muss vollständig eben sein, da ansonsten das Verbundpflaster wellig aufliegt. Dies gilt insbesondere auch für den Randbereich, wenn dort, wo die Abziehschienen angesetzt sind, "von Hand nachgearbeitet wird". Häufig findet sich seitlich zum Planum eine Erdkante, sodass es für einen sauberen Übergang absolut erforderlich ist, dass die Erdkante einen geraden Abschluss bildet.

Darüber hinaus kann es erforderlich sein, nach dem Auflegen der Pflastersteine auf der Grus- oder Sandschicht, die Pflastersteine nachträglich auszurichten.

Die der Erfindung zugrunde liegende Aufgabe besteht demzufolge darin eine Schaufel bereitzustellen, die all dieses ermöglicht, insbesondere soll es mit der Schaufel ermöglicht werden, eine gerade Fläche zu schaffen, einen sauberen rechtwinkligen Abschluss zu einer erhöhten Seitenkante, und auch beim Pflastern eine Ausrichtung der Pflastersteine mit der Schaufel zu ermöglichen

Zur Lösung der Aufgabe wird erfindungsgemäß vorgeschlagen, dass das Schaufelblatt an die Schaufelblattkante anschließend in Richtung der Aufnahmehülse einen ebenen Bereich A mit einer Länge X aufweist, an den sich über einen Bereich B mit der Länge Y eine Wölbung anschließt, wobei die Länge des Bereiches B etwa 3 - 4,5 mal so lang ist wie die Längserstreckung des Bereichs A. Hierbei laufen die Schenkel der seitlichen Aufkantung des Schaufelblattes im Übergang von dem Bereich B zu dem Bereich A auf dem Schaufelblatt aus. Das heißt bei einer üblichen Schaufel ergibt sich somit für den Bereich A eine Länge zwischen etwa 8 und 10 cm. Dieser Bereich x des Schaufelblattes ist eben ausgebildet, und in der Draufsicht rechteckig. Mit einer solchen Schaufel lässt sich zum einen eine ebene Fläche erstellen, wobei insbesondere auch im Randbereich beispielsweise eines Planums zum Verlegen von Pflastersteinen zu einem Erdsockel von wenigen Zentimetern Höhe ein gerader Abschluss erstellbar ist. Durch das vordere Schaufelblatt, das nach Art einer ebenen Zunge ausgebildet ist, kann insofern auch eine Ausrichtung der Pflastersteine vorgenommen werden, als mit dieser Zunge in die Fugen zwischen den Pflastersteinen eingedrungen werden kann, und hierdurch eine Ausrichtung der Pflastersteine erfolgen kann.

Vorteilhafte Ausgestaltungen und Merkmale der Erfindung sind den Unteransprüchen zu entnehmen.

Es wurde bereits dargelegt, dass die Schenkel der U-förmigen Aufkantung in Richtung auf die Schaufelblattkante im Bereich des Übergangs von dem Bereich A zu dem Bereich B auslaufen. Die Oberseite der Aufkantung im Schenkelbereich bildet hierbei eine Gerade. Hierdurch wird bewirkt, dass zu Beginn des Schaufelvorganges, das heißt, zu Beginn des Eintriebes der Schaufel in das zu schaufelnde Gut, der Widerstand verhältnismäßig geringer ist, als zu dem Zeitpunkt zu dem die Aufkantung seitlich an dem Schaufelblatt mit eingetrieben wird. Häufig ist es so, dass das zu schaufelnde Gut, beispielsweise Erde, nach längerer Trockenheit über eine verhältnismäßig feste Außenschale verfügt. Die feste Schale der Erde reicht meistens allerdings nur wenige Zentimeter in das Innere des Erdhaufens hinein. Üblicherweise wird dann die Erde wieder feucht und lässt die Schaufel leichter eindringen, sodass dann wenn die seitliche Aufkantung in das zu schaufelnde Gut eindringt, der hierfür erforderliche Kraftaufwand durch die geringere Eintriebskraft im Bereich der Schaufelblattkante zumindest partiell kompensiert wird.

Nach einem besonderen Merkmal der Erfindung ist vorgesehen, dass das Schaufelblatt im Bereich B, also im Bereich der seitlich durch die Schenkel der Aufkantung definiert ist, von der Schaufelblattkante ausgehend in Richtung der Aufnahmehülse eine Wölbung aufweist, wobei die Wölbung sich nicht nur in Schubrichtung der Schaufel erstreckt, sondern auch quer zur Schubrichtung der Schaufel. Die Wölbung erstreckt sich bis in den Bereich der Aufnahmehülse für den Schaufelstiel. Hieraus wird Folgendes deutlich: Im Bereich hinter der Schaufelblattkante ist das Schaufelblatt eben ausgebildet und zwar über den rechteckigen Bereich A bis zum Beginn der seitlichen Aufkantung. Unmittelbar nach dem ebenen Schaufelblattbereich weist das Schaufelblatt allerdings eine Wölbung auf, wobei sich die Wölbung in zwei Richtungen erstreckt, nämlich zum einen in Längsrichtung der Schaufel, also in Schubrichtung der Schaufel und zum anderen quer zur Längsrichtung, was bedeutet, dass das Schaufelblatt etwa im Bereich B schalenartig ausgebildet ist. Wie bereits an anderer Stelle erläutert, ist für den Eintrieb des Schaufelblattes in das zu schaufelnde Gut in Bezug auf den erforderlichen Kraftaufwand maßgeblich, wie das Schaufelblatt im Bereich der Unterseite ausgebildet ist. Eine Wölbung auf der Unterseite des Schaufelblattes vermindert den Kraftaufwand, insbesondere wenn die Wölbung sich quer zur Schubrichtung erstreckt, wie dies bei dem erfindungsgemäßen Schaufelblatt der Fall ist. Durch den ebenen Bereich an der Schaufelblattkante kann trotz der Wölbung das zu schaufelnde Gut jedoch von einer festen Unterlage vollständig aufgenommen werden. Dies ist beispielsweise bei der Frankfurter-Schaufel nicht der Fall. In Bezug auf die Hallenser Handschaufel ist zu bemerken, dass durch diese Schaufel auch ein hohes Schaufelvolumen aufgenommen werden kann, allerdings ist aufgrund der ebenen unteren Seite des Schaufelblattes jedoch ein erheblich höherer Kraftaufwand erforderlich.

Des Weiteren ist zu bemerken, dass durch die U-förmig umlaufende Aufkantung im Bereich der Wölbung das bereitgestellte Schaufelvolumen zusätzlich erhöht.

Nach einem weiteren Merkmal der Erfindung ist die Schaufelblattkante an beiden Seiten abgerundet, um zu verhindern, dass die Schaufel beim Eindringen in unterschiedlich hartes Material seitlich hängen bleibt.

Nach einem weiteren Merkmal verläuft die Trittkante parallel zur Schaufelblattkante. Das bedeutet, dass die Schaufel beim Eintreiben in das zu schaufelnde Gut im Wesentlichen gerade verlaufend bewegt werden kann. Die Trittkante bildet hierbei den Steg der in der Draufsicht U-förmigen Aufkantung.

Ein besonderes Merkmal der Erfindung zeichnet sich dadurch aus, dass die Schenkel der U-förmigen Aufkantung bündig mit der Seitenkante des Schaufelblattes abschließen, sodass der obere Rand der Aufkantung in einer Ebene mit der Seitenkante des Schaufelblattes verläuft. Anders ausgedrückt bedeutet dies, dass die Schenkel bei einer in der Draufsicht U-förmigen Aufkantung senkrecht zu dem Schaufelblatt im Bereich B verlaufen. Hierdurch wird insbesondere erreicht, dass z. B. beim Aushub eines Grabens auf einfache Weise zwischen Wandung und Boden ein rechter Winkel hergestellt werden kann.

Anhand der Zeichnungen wird die Erfindung nachstehend beispielhaft näher erläutert.

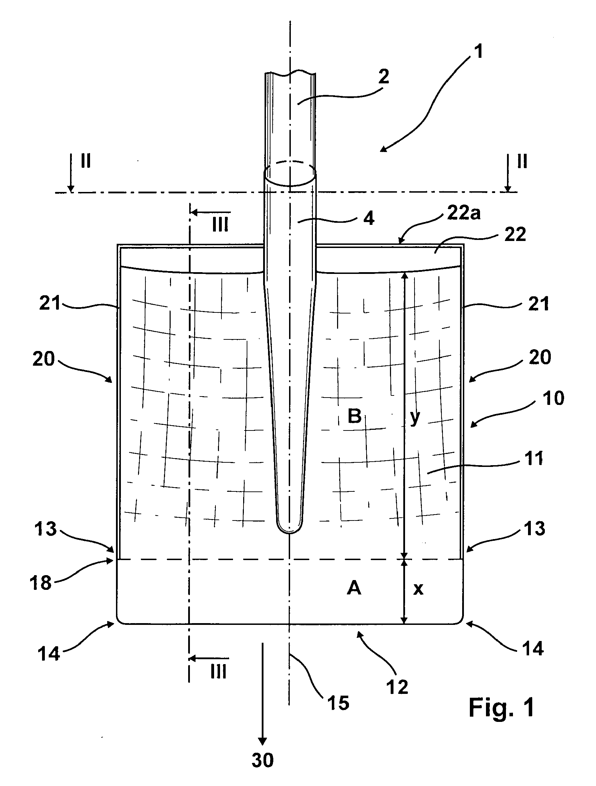

- Figur 1: zeigt eine Draufsicht auf das Schaufelblatt mit dem angedeuteten Schaufelstiel;
- Figur 2: zeigt eine Ansicht gemäß der Linie II - II aus Figur 1;
- Figur 3: zeigt einen Schnitt gemäß der Linie III - III aus Figur 1.

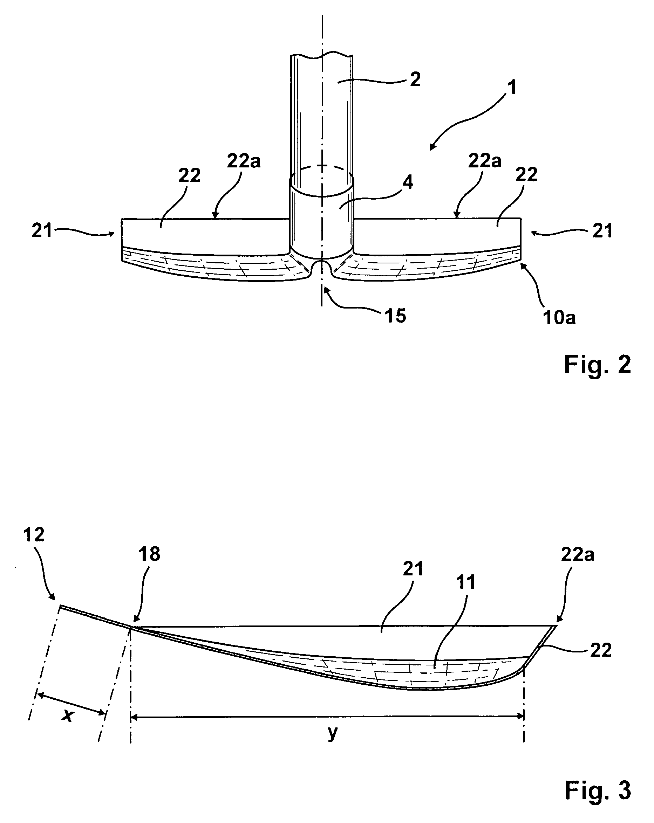

Die insgesamt mit 1 bezeichnete Schaufel umfasst den Schaufelstiel 2 und das mit 10 bezeichnete Schaufelblatt, wobei das Schaufelblatt die Hülse 4 für den Stiel 2 aufweist. Das Schaufelblatt besitzt an seinem vorderen Ende, das heißt an seinem in Schubrichtung gesehen vorderen Ende, die Schaufelblattkante 12. Die Schaufelblattkante 12 weist im Übergang zum Seitenbereich 13 abgerundete Ecken 14 auf. An die Schaufelblattkante 12 schließt sich ein in der Draufsicht rechteckiger Bereich A mit einer Länge x an, der in Fortsetzung der geraden Schaufelblattkante ebenfalls eben ausgebildet ist. Im Anschluss an diesen Schaufelblattbereich A erstreckt sich ein Schaufelblattbereich B mit der Länge y, wobei der Schaufelblattbereich B zu zwei Seiten hin also in Quer- und auch in Längsrichtung des Blattes gewölbt ausgebildet ist. Dies ergibt sich aus der Darstellung gemäß Figur 2, und zwar insofern als dort die Wölbung zu beiden Seiten der Mittellängsachse 15 dargestellt ist. Die Wölbung in Längsrichtung der Schaufel, das heißt parallel zur Mittellängsachse 15, ergibt sich in Anschauung der Darstellung gemäß Figur 3. Dort ist erkennbar, dass in Längsrichtung des Schaufelblattes das Schaufelblatt gewölbt ist, wobei sich an die Wölbung der Bereich A anschließt, der wie bereits an anderer Stelle ausgeführt, eben ausgebildet ist. Hierbei ist zu bemerken, dass die Länge y des Bereichs B etwa 3 - 4,5 mal so lang ist, wie die Länge des geraden Teils A des Schaufelblattes. Über die Länge x des Bereichs A ist insofern eine in der Draufsicht rechteckige Zunge gebildet.

U-förmig umlaufend befindet sich auf dem Schaufelblatt 10 die mit 20 bezeichnete Aufkantung. Die Aufkantung 20 umfasst die seitlichen Schenkel 21 zu beiden Seiten des Schaufelblattes, sowie den Steg 22, der sich zu beiden Seiten der Aufnahmehülse 4 für den Schaufelstiel 2 erstreckt. Die Schenkel 21 erstrecken sich über die Länge y des Schaufelblattbereichs B und laufen im Bereich der vorderen, ebenen Ausbildung (Bereich A) des Schaufelblattes zum Schaufelblatt hin aus (Figur 3, Pfeil 18). Die Schenkel 21 verlaufen in einer Ebene mit der Schaufelblattkante 10a, sodass die Schenkel 21 bei auf einem Untergrund aufstehender Schaufel vertikal stehen. Der Steg, der in die Draufsicht U-förmigen Aufkantung zeigt im hinteren Bereich der Aufkantung eine gerade Oberkante als Trittkante 22a, um einen sicheren Aufstand für den Fuß beim Eintreiben der Schaufel in das zu schaufelnde Gut zu ermöglichen.

Erfindungsmäßig ist nun bei dem Schaufelblatt, dass sich an die ebene Schaufelblattkante 12 ein rechteckiger Bereich A des Schaufelblattes anschließt, der über die Länge x ebenfalls noch eben ausgebildet ist. Hieran schließt sich ein Bereich B des Schaufelblattes an, der über die Länge y gewölbt ausgebildet ist, und zwar sowohl in Schubrichtung (Pfeil 30) als auch quer dazu. Wesentlich ist des Weiteren die umlaufende Aufkantung 20. Im hinteren Stegbereich der Aufkantung 20 also im Bereich, der mit 22 bezeichnet ist, weist die Aufkantung eine ebene Oberkante 22a auf, um einen sicheren Aufstand für den Fuß beim Eintreiben der Schaufel zu erzielen. Durch die Aufkantung und die Wölbung wird erreicht, dass ein relativ großes Volumen von der Schaufel aufgenommen werden kann, und insofern auch Wasser und Schlamm geschippt werden kann, eben bedingt auch durch die Aufkantung. Die Wölbung der Schaufel in zwei Raumrichtungen bewirkt, dass der Widerstand beim Eintrieb der Schaufel in das zu schaufelnde Gut verhältnismäßig geringer ist, als wenn die Unterseite der Schaufel in beide Raumrichtungen eben ausgebildet wäre.

## Patentansprüche

1. Schaufel (1), umfassend ein Schaufelblatt (10) und eine Aufnahmehülse (4) für den Schaufelstiel (2), wobei das Schaufelblatt (10) eine gerade Schaufelblattkante (12) aufweist und wobei an dem Schaufelblatt zu beiden Seiten der Aufnahmehülse (4) für den Schaufelstiel eine Trittkante (22) verläuft, wobei das Schaufelblatt im Randbereich mit einer in der Draufsicht auf das Schaufelblatt U-förmig verlaufenden Aufkantung (20) versehen ist,
**dadurch gekennzeichnet,**
**dass** das Schaufelblatt (10) an die Schaufelblattkante (12) anschließend in Richtung der Aufnahmehülse (4) einen ebenen Bereich A mit einer Länge x aufweist, an den sich über einen Bereich B mit der Länge y eine Wölbung (30) anschließt, wobei die Länge des Bereichs B in etwa 3 - 4,5 mal so lang ist wie die Längserstreckung des Bereichs A, wobei die Schenkel (21) der seitlichen Aufkantung (20) des Schaufelblattes (10) im Übergang von dem Bereich B zu dem Bereich A auf dem Schaufelblatt auslaufen.

2. Schaufel nach Anspruch 1,
**dadurch gekennzeichnet,**
**dass** der Steg (22) der in der Draufsicht U-förmigen Aufkantung (20) sich zu beiden Seiten der Aufnahmehülse (4) für den Schaufelstiel (2) erstreckt.

3. Schaufel nach einem der voranstehenden Ansprüche,
**dadurch gekennzeichnet,**
**dass** der Bereich A in der Draufsicht rechteckförmig ausgebildet ist.

4. Schaufel nach einem der voranstehenden Ansprüche,
**dadurch gekennzeichnet,**
**dass** die Schaufelblattkante (12) an beiden Seiten abgerundete Ecken (14) aufweist.

5. Schaufel nach einem der voranstehenden Ansprüche,
**dadurch gekennzeichnet,**
**dass** die Trittkante (22) parallel zur Schaufelblattkante (12) verläuft.

6. Schaufel nach einem der voranstehenden Ansprüche,
**dadurch gekennzeichnet,**
**dass** sich die Wölbung (11) nicht nur in Schubrichtung der Schaufel (1) erstreckt sondern auch quer zur Schubrichtung der Schaufel.

7. Schaufel nach einem der voranstehenden Ansprüche,
**dadurch gekennzeichnet,**
**dass** die Schenkel (21) der U-förmigen Aufkantung bündig mit der Seitenkante (10a) des Schaufelblatts (10) abschließen, sodass der obere Rand des Schenkels (21) in einer Ebene mit der Seitenkante (10a) verläuft.
